# EUROPÄISCHE PATENTSCHRIFT

(11) **EP 3 102 384 B1**
(45) Veröffentlichungstag und Bekanntmachung des Hinweises auf die Patenterteilung: **19.09.2018**
(21) Anmeldenummer: 15718444.1
(22) Anmeldetag: 21.04.2015
(51) Int. Cl.: B29C 49/68, B29C 49/78, B29C 49/64, B29K 67/00, B29C 49/06, B29C 49/28

(54) **VERFAHREN UND VORRICHTUNG ZUM TEMPERIEREN VON VORFORMLINGEN**
METHOD AND DEVICE FOR TEMPERING PREFORMS
PROCÉDÉ ET DISPOSITIF D'ÉQUILIBRAGE DE LA TEMPÉRATURE DE PRÉFORMES

(30) Priorität: 02.05.2014 DE 102014006275
(43) Veröffentlichungstag der Anmeldung: 14.12.2016
(73) Patentinhaber: KHS Corpoplast GmbH, 22145 Hamburg (DE)
(72) Erfinder: ULUTÜRK, Deniz, 22765 Hamburg (DE); RASCH, Jens-Peter, 22926 Ahrensburg (DE); HAESENDONCKX, Frank, 22145 Hamburg (DE)
(74) Vertreter: Hausfeld, Norbert
(86) Internationale Anmeldenummer: PCT/EP2015/000825
(87) Internationale Veröffentlichungsnummer: WO 2015/165575

(56) Entgegenhaltungen:
- EP-A1- 2 537 664
- EP-A2- 2 380 719
- WO-A1-02/087850
- US-A1- 2011 300 497

## Beschreibung

Die Erfindung betrifft ein Verfahren und eine Vorrichtung zum Temperieren von Vorformlingen in einer Blasmaschine mit einem reflektierende Wandungen aufweisenden Heizkanal, der von einem Heizkasten gebildet wird. Durch diesen Heizkanal werden die Vorformlinge zum Zwecke der Temperierung auf Blasformungstemperatur hindurchgeführt. Der Heizkasten weist zum Aufheizen der Vorformlinge Heizmittel auf. Weiterhin weist der Heizkasten eine Kühleinrichtung auf, die wenigstens ein Gebläse aufweist. Die Kühleinrichtung dient der Kühlung der reflektierenden Wandungen des Heizkanals mittels einer nur außerhalb des Heizkanals an den Wandungen entlang strömenden Luftmenge, wobei die Heizleistung der Heizmittel einstellbar ist.

Solche Verfahren und Vorrichtungen sind aus dem Stand der Technik bekannt und werden z.B. in von der Anmelderin verkauften Blasmaschinen zur thermischen Konditionierung von Vorformlingen zur anschließend Blasformung verwendet.

Die Aufgabe solcher Verfahren und Vorrichtungen besteht darin, die zumeist in einem Spritzgussverfahren hergestellten Vorformlinge für den nachfolgenden Schritt des Blasformens auf die richtige Temperatur zu bringen. Diese Temperatur liegt z.B. für PET bei ca. 120° und muss in einem engen Korridor eingehalten werden, um Materialveränderungen durch Überstrecken oder Phasenübergänge des Materials zu vermeiden. In der Regel wird den Vorformlingen auch ein bestimmtes Temperaturprofil aufgeprägt.

Im Betrieb solcher Verfahren und Vorrichtungen werden die Vorformlinge z.B. durch Strahlungswärme von Heizstrahlern erhitzt. Es werden bevorzugt IR-Strahler und/oder NIR-Strahler verwendet. Zwischen den Vorformlingen hindurch gelangende Strahlung oder bei Durchgang durch den Vorformling nicht absorbierte Strahlung wird dabei von den reflektierenden Wandungen der Heizkanäle zurückgeworfen, um den Wirkungsgrad der Heizkästen zu erhöhen und um eine Tiefenerwärmung im Vorformlingsmaterial zu verbessern. Dabei heizen sich zwangsläufig auch die reflektierenden Wandungen der Heizkanäle auf.

Die Wandungen der Heizkanäle bestehen zumeist aus im IR- und/oder NIR-Bereich gut reflektierenden Aluminiumwerkstoffen, welche jedoch bei Temperaturen oberhalb von 180° zu verstärkter Korrosion neigen und daher gekühlt werden müssen.

Es sind Verfahren und Vorrichtungen bekannt, bei denen die Vorformlinge während des Transports durch die Heizstrecke, die z.B. von mehreren in Transportrichtung hintereinander angeordneten Heizkanälen gebildet wird, mit Kühlluft beaufschlagt werden, welche durch Öffnungen in den Wandungen zugegeben wird. Eine solche Heizvorrichtung einer Blasmaschine zeigt z.B. die US2011/0300497 A1. Bei dieser Blasmaschine bewirkt die in Richtung der Vorformlinge abgegebene Kühlluft primär eine Abkühlung der Vorformlinge, was auch Zweck der Kühlung ist. An den Vorformlingen vorbeiströmende Luft beaufschlagt auch die Wandungen des Heizstrahlers und bewirkt dadurch dessen Kühlung. Die Heizleistung des Heizstrahlers und die Kühlluftleistung sind fest vorgegeben, um ein gewünschtes Temperaturprofil der Vorformlinge zu erreichen. Auch die EP 2 380 719 A2 zeigt einen vergleichbaren Stand der Technik.

Bei gattungsgemäßen Verfahren und Vorrichtungen wird das gewünschte Temperaturprofil der Vorformlinge durch die entsprechende Einstellung der Heizstrahler erreicht. Eine aktive Kühlung der Vorformlinge im zu temperierenden Bereich ist in der Regel nicht erforderlich, so dass zu diesem Zweck keine Kühlluft in den Heizkanal abgegeben werden muss. Es ist aber im Stand der Technik bekannt, den Neckbereich des Vorformlings aktiv zu kühlen. Es ist auch bekannt, den Vorformlingen das gewünschte Temperaturprofil aufzuprägen durch gleichzeitiges Erwärmen mittels Heizstrahlung und Kühlen mittels Anblasen mit kühlender Luft. Einen solchen Stand der Technik zeigt z.B. die WO 02/087850, bei der Heizleistung und Kühlleistung unabhängig voneinander einstellbar sind zur Erreichung einer im wesentlichen gleichbleibenden Oberflächentemperatur der Vorformlinge. DieEP 2 380 719 A2 offenbart ein Verfahren gemäß dem Oberbegriff des Anspruchs 1 und eine Vorrichtung gemäß dem Oberbegriff des Anspruchs 11.

Bei gattungsgemäßen Verfahren und Vorrichtungen werden in der Regel die reflektierenden Wandungen gekühlt, indem kühlende Luft daran vorbeigeführt wird. Um zuverlässig ein Überhitzen der Reflektorwände zu erreichen wird die Kühlung dabei so eingestellt, dass bei maximaler Heizleistung der Heizstrahler die kritische Temperatur nicht erreicht wird. Es ist bekannt, die Kühlleistung im Bedarfsfall manuell zu verstellen.

Da in Blasmaschinen unterschiedliche Vorformlinge mit unterschiedlichem Temperaturverhalten und bei unterschiedlichen Geschwindigkeiten verarbeitet werden, muss die Heizleistung der Heizmittel des Heizkanals einstellbar sein. Sie wird im Stand der Technik beispielsweise auch in Abhängigkeit unterschiedlicher Parameter geregelt.
oder gesteuert. Im Betrieb der Blasmaschine sind nie alle Heizmittel auf maximale Leistung eingestellt. Da die bisher bekannten Kühleinrichtungen aber so ausgelegt und betrieben werden, dass eine Überhitzung der reflektierenden Wandungen in jedem Fall verhindert ist, also auch im Fall maximaler Heizleistung, ist die Kühlleistung für die im Maschinenbetrieb tatsächlich aufgebrachte Heizleistung überdimensioniert.

Naturgemäß wird dem Heizkanal durch die Kühleinrichtung Wärme entzogen, wodurch der Wirkungsgrad der Heizvorrichtung sinkt, wobei die relativen Wärmeverluste gerade bei reduzierter Heizleistung besonders groß werden.

Es ist daher die Aufgabe der Erfindung, ein Verfahren und eine Vorrichtung zum Temperieren von Vorformlingen in einer Blasmaschine bereitzustellen, die bezüglich des Wirkungsgrades insbesondere bei reduzierter Heizleistung verbessert ist.

Diese Aufgabe wird gemäß der Erfindung gelöst durch ein Verfahren gemäß Anspruch 1 sowie durch eine Vorrichtung gemäß Anspruch 11. Dieses Verfahren und diese Vorrichtung ist dadurch weitergebildet ist, dass eine Steuereinrichtung vorgesehen ist, die ausgeführt ist, um die von der Kühleinrichtung aufgebrachte Kühlleistung, z.B. die geförderte Luftmenge an kühlender Luft, in Abhängigkeit von der jeweiligen Heizleistung der Heizmittel des Heizkanals zu steuern oder zu regeln. Dazu kann diese Heizleistung zum Beispiel erfasst und der Steuereinrichtung als Messgröße zugeführt werden. Weitere vorteilhafte Ausgestaltungen der Erfindung werden in den Unteransprüchen angegeben.

Durch eine bisher nicht bekannte Steuerung oder Regelung der von der Kühleinrichtung geförderten Luftmenge in Abhängigkeit von der jeweiligen Heizleistung des Heizkastens ist es möglich, die reflektierenden Wandungen nur in dem Maße zu kühlen und somit dem Heizkanal jeweils nur so viel Wärme zu entziehen, wie zur Einhaltung der materialbedingten Temperaturgrenzen der Wandungen wirklich erforderlich ist.

Erfindungsgemäß werden entlang der Transportstrecke bevorzugt mehrere Heizkästen in Transportrichtung hintereinanderliegend angeordnet, die die Heizstrecke bilden. Dabei ist es möglich, dass jeder Heizkasten eine eigene Kühleinrichtung und/oder eine eigene Steuereinrichtung aufweist. Ein solcher Heizkasten mit integrierter Kühlung und/oder Steuerung könnte als Heizmodul bezeichnet werden und weist einen komplexerem Aufbau gegenüber bisher üblichen Heizkästen auf, die keine integrierte Kühleinrichtung und keine komplexe Steuerung aufwiesen. Es ist aber auch möglich, bisher übliche Heizkästen zu verwenden und diese mit einer zugeordneten Kühleinrichtung und einer zugeordneten Steuereinrichtung zu verknüpfen. Diese zugeordneten Kühl- und/oder Steuereinrichtungen können auch gleichzeitig mehreren bisher üblichen Heizkästen zugeordnet sein. Alle diese Varianten sind Gegenstand der beanspruchten Erfindung.

Während des auf die Temperierung folgenden Blasformschritts wird nur der zu reckende und zu expandierende Gefäßbereich der Vorformlinge umgeformt, während der eine Behälteröffnung bildende Neckbereich bereits während des Spritzgusses seine endgültige Form erhält. Da der Neckbereich während des Blasformschritts zur Fixierung des Vorformlings genutzt wird und um eine unerwünschte Verformung zu verhindern, muss dieser in der Regel vor einer übermäßigen Erwärmung während der thermischen Konditionierung des Vorformlings geschützt werden. Dazu wird zum einen die in dem Heizkanal abgegebene Heizstrahlung durch Blenden von dem Neckbereich der Vorformlinge abgeschirmt. Zum anderen wird gemäß einer Weiterbildung der Erfindung ein Teil der von der Kühleinrichtung aufgebrachten Kühlleistung, z.B. ein Teil der geförderten Luftmenge, zur Kühlung des Neckbereichs der Vorformlinge eingesetzt, z.B. Kühlluft an diesem entlang geführt.

In einer bevorzugten Ausführungsvariante des erfindungsgemäßen Verfahren und der erfindungsgemäßen Vorrichtung sind Temperatursensoren zur Überwachung der Temperatur der reflektierenden Wandungen und/oder der Neckbereiche der Vorformlinge vorgesehen. Diese Temperatursensoren ermöglichen die Überwachung der jeweiligen Temperaturen und können somit dazu beitragen, eine genauere Steuerung oder Regelung der Kühlleistung und eine nachteilige Überhitzung der Wandungen und/oder des Neckbereiches der Vorformlinge bei reduzierter Kühlleistung zu erreichen.

Für die Steuerung oder Regelung der Kühlleistung, z.B. der geförderten Kühlluftmenge, kommen verschiedene technische Lösungen in Betracht. In einer bevorzugten Ausgestaltung des erfindungsgemäßen Verfahrens und der erfindungsgemäßen Vorrichtung umfasst die Kühleinrichtung dazu z.B. wenigstens einen Lüfter, der einen drehzahlgeregelten Motor aufweist. Ein im Ergebnis somit drehzahlgeregelter Lüfter ermöglicht insbesondere eine direkte, reproduzierbare und lineare Einstellung der geförderten Luftmenge.

Gemäß einer weiteren Ausgestaltung der erfindungsgemäßen Vorrichtung weist die Kühleinrichtung wenigstens eine die geförderte Kühlluftmenge beeinflussende Drosselklappe auf. Mittels einer solchen Drosselklappe, welche insbesondere als automatisch gesteuerte Drosselklappe ausgeführt sein kann, lässt sich die geförderte Luftmenge besonders einfach Einstellen.

In einer bevorzugten Ausführungsvariante eines erfindungsgemäßen Verfahrens oder einer erfindungsgemäßen Vorrichtung ist die Steuereinrichtung ausgeführt, die geförderte Luftmenge gemäß einer voreingestellten Kennlinie in Abhängigkeit von der jeweiligen Heizleistung des Heizkastens einzustellen. Unter einer voreingestellten Kennlinie wird dabei im Sinne der Erfindung insbesondere verstanden, dass für jede einstellbare Heizleistung des Heizkastens eine definierte geförderte Luftmenge vorgegeben ist. Eine so ausgeführte Steuereinrichtung kann besonders einfach aufgebaut werden.

Gemäß einer bevorzugten Weiterbildung der Erfindung sind in dem Verfahren oder in der Vorrichtung mehrere separat steuerbare Heizkästen mit Heizmitteln vorgesehen, deren mehrere Heizkanäle die Heizstrecke für die Vorformlinge ausbilden, und die Steuereinrichtung ist ausgeführt, um die geförderte Luftmenge gemäß eines voreingestellten Kennlinienfeldes in Abhängigkeit der jeweiligen Heizleistungen der Heizmittel der einzelnen Heizkästen einzustellen.

Insbesondere für Blasmaschinen mit hohem Durchsatz ist es vorteilhaft, wenn mehrere Heizkästen die Heizstrecke bilden, welche separat gesteuert werden können. Dabei werden z.B. nicht alle Heizkästen auf gleicher Leistung betrieben. Es können z.B. auch einzelne Heizkästen in der Leistung reduziert oder ganz oder teilweise abgeschaltet werden, während andere Heizkästen mit hoher oder voller Leistung betrieben werden. Durch die beschriebene Weiterbildung kann z.B. anhand des Betriebsleistungsmusters der mehreren Heizkästen eine bestimmte Kennlinie des Kennlinienfeldes ausgewählt werden, aus welcher dann basierend auf der eingestellten Gesamtheizleistung die zu fördernde Luftmenge bzw. die aufzubringende Kühlleistung bestimmt wird.

In einer bevorzugten Ausführungsvariante des erfindungsgemäßen Verfahrens oder der erfindungsgemäßen Vorrichtung ist die Steuereinrichtung ausgeführt, die geförderte Luftmenge zu erhöhen, wenn die Temperaturen der reflektierenden Wandungen und/oder der Neckbereiche der Vorformlinge oberhalb jeweils vorbestimmter kritischer Temperaturen sind.

Es ist auch möglich, die Steuereinrichtung so auszubilden, dass ein Übergang auf eine eine niedrigere Kühlleistung bedeutende Kennlinie erfolgt, bis eine voreingestellte kritische Grenztemperatur erreicht wird.

Auf diese Weise können die Kennlinien so gewählt werden, dass die gemäß der Kennlinien bestimmten geförderten Luftmengen ausreichend groß sind, um die Wandungstemperatur und/oder die Necktemperatur unter den vorbestimmten kritischen Temperaturen bleiben. Im Betrieb der Blasmaschine kann dann die Kühlleistung bzw. die geförderte Luftmenge schrittweise oder kontinuierlich weiter reduziert werden, bis die kritischen Temperaturen erreicht werden. Dabei sind die vorbestimmten kritischen Temperaturen bevorzugt so gewählt, dass noch ein ausreichender Sicherheitspuffer gegenüber den Temperaturen verbleibt, bei denen mit negativen Auswirkungen zu rechnen ist.

Wenn durch eine Änderung des Betriebszustandes der Blasmaschine die gemessenen Temperaturen ansteigen, kann die Steuereinrichtung die Kühlleistung, z.B. die geförderte Luftmenge, wieder steigern, bis die kritischen Temperaturen wieder unterschritten sind.

Die Erfindung soll nachfolgend anhand von Ausführungsbeispielen weiter erläutert werden, die in den Figuren dargestellt sind. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Blasmaschine zur Blasformung von Behältern,
- Fig. 4: eine schematische Querschnittsdarstellung eines Heizkastens,
- Fig. 5: eine schematische Darstellung einer Ausführungsform einer Kühleinrichtung, und
- Fig. 6: eine schematische Darstellung eines Kennlinienfeldes zur Einstellung der Kühlluftmenge einer Kühleinrichtung.

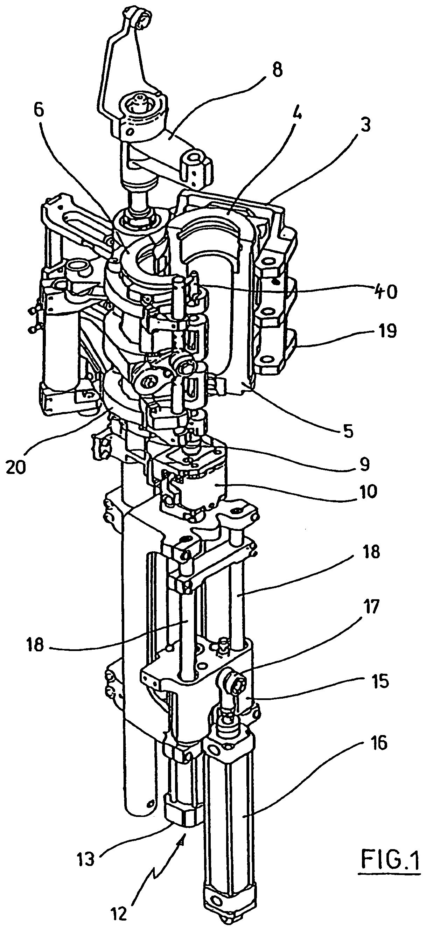

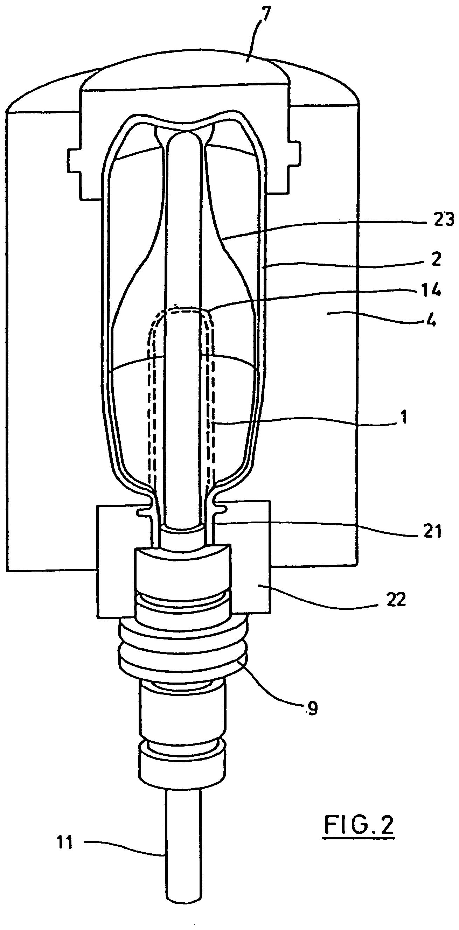

Der prinzipielle Aufbau einer Vorrichtung zur Umformung von Vorformlingen 1 in Behälter 2 ist in den Fig. 1 und in Fig. 2 dargestellt.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ohne Beschränkung der Allgemeinheit ein spritzgegossenes Teil aus Polyethylenterephthalat (PET) sein. Es sind aber auch andere geeignete thermoplastische Werkstoffe bekannt, aus denen der Vorformling bestehen kann. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und aus einem Bodenteil 7, das von einer Hubvorrichtung 8 positionierbar ist. Der Vorformling 1 kann im Bereich der Blasstation 3 von einem Transportdorn 9 gehalten sein, der gemeinsam mit dem Vorformling 1 eine Mehrzahl von Behandlungsstationen innerhalb der Vorrichtung durchläuft. Es ist aber auch möglich, den Vorformling 1 beispielsweise über Zangen oder andere Handhabungsmittel direkt in die Blasform 4 einzusetzen.

Zur Ermöglichung einer Druckluftzuleitung ist unterhalb des Transportdornes 9 ein Anschlußkolben 10 angeordnet, der dem Vorformling 1 Druckluft zuführt und gleichzeitig eine Abdichtung relativ zum Transportdorn 9 vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn eine Mehrzahl von Blasstationen 3 auf einem rotierenden Blasrad angeordnet ist.

Bei der in Fig. 1 dargestellten Ausführungsform ist das Recksystem derart ausgebildet, dass eine Tandem-Anordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen .die Führungsbahn gedrückt. Der Schlitten 15 gleitet entlang von zwei Führungselementen 18.

Nach einem Schließen der im Bereich von Trägern 19,20 angeordneten Formhälften 5,6 erfolgt eine Verriegelung der Träger 19,20 relativ zueinander mit Hilfe einer Verriegelungseinrichtung 40.

Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

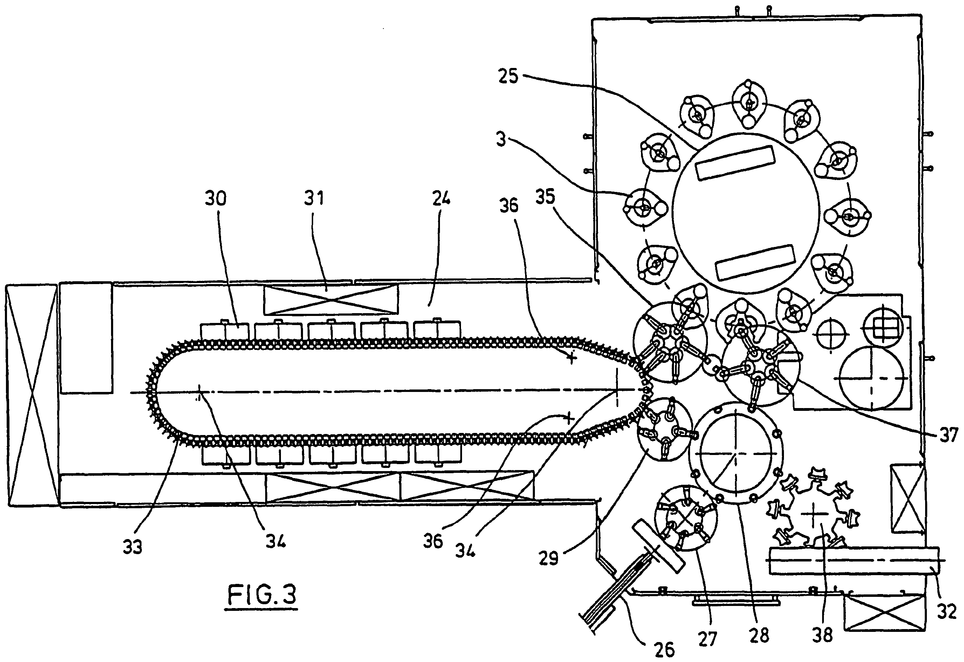

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert.

Entlang der Heizstrecke 24 sind Heizkästen 30 sowie Gebläse 31 angeordnet, um die Vorformlinge 1 zu temperieren. Nach einer ausreichenden Temperierung der Vorformlinge 1 werden diese an das Blasrad 25 übergeben, in dessen Bereich die Blasstationen 3 angeordnet sind. Die fertig geblasenen Behälter 2 werden von weiteren Übergaberädern einer Ausgabestrecke 32 zugeführt. Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 aus einer Vielzahl umlaufender Transportelemente 33 ausgebildet ist, die kettenartig aneinandergereiht und entlang von Umlenkrädern 34 geführt sind. Insbesondere ist daran gedacht, durch die kettenartige Anordnung eine im Wesentlichen rechteckförmige Grundkontur aufzuspannen. Bei der dargestellten Ausführungsform werden im Bereich der dem Übergaberad 29 und einem Eingaberad 35 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 29 und des Eingaberades 35 relativ zueinander erweist sich die dargestellte Anordnung als besonders zweckmäßig, da im Bereich der entsprechenden Ausdehnung der Heizstrecke 24 drei Umlenkräder 34,36 positioniert sind, und zwar jeweils die kleineren Umlenkräder 36 im Bereich der Überleitung zu den linearen Verläufen der Heizstrecke 24 und das größere Umlenkrad 34 im unmittelbaren Übergabebereich zum Übergaberad 29 und zum Eingaberad 35. Alternativ zur Verwendung von kettenartigen Transportelementen 33 ist es beispielsweise auch möglich, ein rotierendes Heizrad zu verwenden.

Nach einem fertigen Blasen der Behälter 2 werden diese von einem Entnahmerad 37 aus dem Bereich der Blasstationen 3 herausgeführt und über das Übergaberad 28 und ein Ausgaberad 38 zur Ausgabestrecke 32 transportiert.

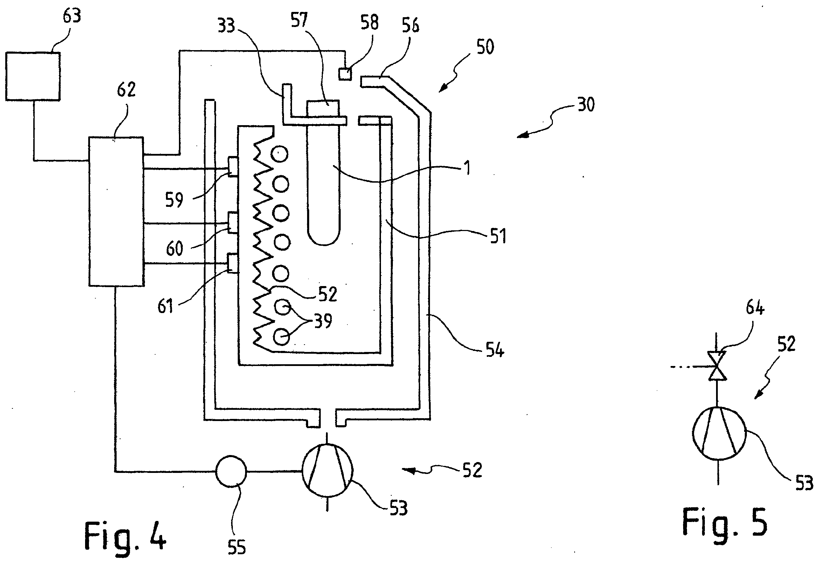

In modernen Blasmaschinen weist die Heizstrecke 24 zumeist einen oder mehrere Heizkästen 30 auf, die einen geschlossenen Heizkanal 50 bilden. In Figur 4 ist ein Heizkasten 30 mit davon ausgebildetem Heizkanal 50 im Querschnitt schematisch dargestellt.

Der Heizkasten 30 weist reflektierende Wandungen 51 auf, die den Heizkanal 50 umschließen. In dem Heizkasten 30 sind mehrere Heizstrahler 39 in vertikaler Richtung übereinanderliegend angeordnet, die Heizstrahlung in den Heizkanal 50 in Richtung auf einen durch den Heizkanal 50 hindurchbewegten Vorformling 1 abgeben. Im Bereich der Heizstrahler 39 weist die Wandung 51 reflektierende Strukturen 52 auf, welche die von den Heizstrahlern 39 in vorformlingsabgewandte Richtung abgegebene Strahlung gleichmäßig in das Innere des Heizkanals 50 zurückwerfen, z.B. um die Heizstrahler 39 herum.

Die Vorformlinge 1 werden im dargestellten Beispiel mittels Transportelementen 33 durch den Heizkasten 30 hindurch gefördert.

Um ein Überhitzen des Neckbereichs der Vorformlinge 1 und der Wandungen 51 des Heizkastens 30 zu vermeiden, ist eine Kühleinrichtung 52 vorgesehen, die ein Gebläse 53 und einen Luftkasten 54 umfasst. Das Gebläse 53 wird von einem drehzahlgeregelten Motor 55 angetrieben.

Die von dem Gebläse 53 geförderte Luft strömt durch den Luftkasten 54 an den Wandungen 51 entlang und kühlt diese dabei. Ein Teil der von dem Gebläse 53 geförderten Luft wird dabei durch Umlenkmittel 56 auf den Neckbereich 57 der Vorformlinge 1 geleitet, um diese zu kühlen.

Im Bereich des Heizkanals 50 sind mehrere Temperatursensoren 58, 59, 60, 61 angeordnet. Der Sensor 58 ist als Strahlungsthermometer, z.B. als Pyrometer, zur Messung der Temperatur des Neckbereichs 57 des Vorformlings 1 ausgeführt. Die Sensoren 59, 60 und 61 sind zur Messung der Temperatur der Wandung 51 des Heizkanals 50 ausgeführt. Dabei ist der Sensor 59 beispielsweise ein PT100-Sensor zur linearen Messung der Wandungstemperatur, während die Sensoren 60 und 61 als einfache Bimetallschalter ausgeführt sind. Die Signale der Temperatursensoren 58, 59, 60, 61 werden einer Steuereinrichtung 62 zugeführt.

Die Heizleistung der Heizstrahler 39 wird von einer Anlagensteuerung 63 eingestellt und der Steuereinrichtung 62 übermittelt. Neben der Einstellung der Gesamtleistung wird durch die Anlagensteuerung auch die Leistungsverteilung zwischen den einzelnen auf unterschiedlichem Höhenniveau angeordneten Heizstrahlern sowie zwischen mehreren, entlang der Heizstrecke 24 angeordneten Heizkästen 30 vorgegeben.

Ausgehend von der eingestellten Heizleistung bzw. Heizleistungsverteilung der Heizstrahler 39 stellt die Steuereinrichtung 62 die durch die Kühleinrichtung 52 geförderte Luftmenge ein. Dazu verändert die Steuereinrichtung 62 die Drehzahl des Motors 55. In einer in Figur 5 skizzierten alternativen Ausführungsvariante der Kühleinrichtung 51 ist dem Lüfter 53 eine steuerbare Drosselklappe 64 nachgeschaltet, über welche die geförderte Luftmenge reguliert wird. Bei alternativen Kühleinrichtungen sind alternative Stellglieder vorzusehen, um die gewünschte Einstellung der Kühlleistung zu realisieren.

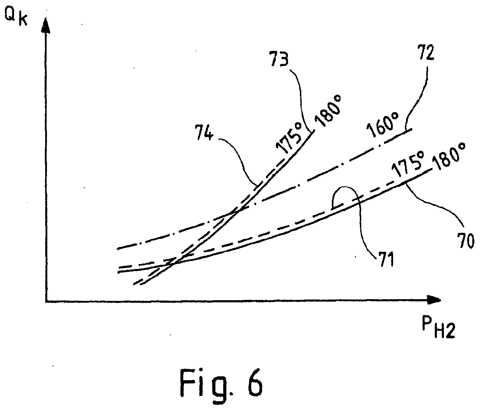

In Figur 6 ist ein Kennlinienfeld dargestellt. Es ist aufgetragen die geförderten Luftmenge Q_{K} über der Heizleistung P_{HZ}. Für jede Kennlinie ist einer bestimmten Heizleistung eine bestimmte Kühlluftmenge zugeordnet..

Eine erste durchgezogene Kennlinie 70 zeigt die Luftmenge, die bei verschiedenen Heizleistungen benötigt wird, um die Temperatur der Wandungen 51 bei der kritischen Temperatur zu halten, die bei üblichen Aluminiumwerkstoffen ca. 180° C beträgt. Eine erste gestrichelte Kennlinie 71 zeigt die erforderliche Luftmenge, um bei gleicher Heizleistung die Temperatur etwas unter der kritischen Temperatur zu halten, z.B. bei 175° C.

Eine strichpunktierte Kennlinie 72 zeigt eine Luftmenge, bei der die Temperatur noch weiter vom kritischen Punkt entfernt ist, z.B. bei 160° C liegt.

Im Betrieb der Blasmaschine wird durch die Steuereinrichtung 62 zunächst eine Luftmenge gemäß der Kennlinie 72 eingestellt und die sich einstellenden Temperaturen werden mittels der Temperatursensoren 58, 59, 60 erfasst. Solange eine kritische Temperatur nicht erreicht ist, wird die Luftmenge durch die Steuereinrichtung 62 langsam reduziert, wodurch die erfassten Temperaturen ansteigen. Sobald die Temperaturen der Wandung 61 und/oder des Neckbereichs 57 der Vorformlinge 1 sich zu sehr ihrem kritischen Wert nähern, wird die aktuell eingestellte Luftmenge konstant gehalten oder wieder erhöht.

Die Überwachung der kritischen Temperatur der Wandung 51 ist dabei mittels der einfachen Bimetallschalter 60, 61 realisiert. Der Bimetallschalter 60 ist so dimensioniert, dass er bei einer Temperatur schaltet, die noch unterhalb der kritischen Temperatur liegt, also z.B. bei 175° C. Solange der Bimetallschalter 60 geschlossen ist, kann die Steuereinrichtung 62 die Luftmenge weiter reduzieren. Sobald der Bimetallschalter 60 seine Schalttemperatur erreicht und sich öffnet, muss die Luftmenge beibehalten werden. Der Bimetallschalter 61 ist auf die tatsächlich kritische Temperatur der Wandung 51 eingestellt, z.B. auf 180° C und bewirkt eine Notabschaltung, sobald er seine Schalttemperatur erreicht und somit eine Fehlfunktion der Steuereinrichtung 62 feststellt.

Die Überwachung der kritischen Temperatur des Neckbereichs 57 der Vorformlinge 1 erfolgt über das Strahlungsthermometer 58.

Bei einer anderen Heizleistungsverteilung der mehreren Heizkästen 30 ergeben sich andere Kennlinien 73, 74 für die einzublasenden Kühlluftmengen zur Einhaltung der gewünschten Temperaturen. Die Kennlinien 70, 71, 72, 73, 74 bilden ein Kennlinienfeld, anhand dessen die Steuereinrichtung 62 die jeweilig von der Kühleinrichtung aufzubringenden Kühlleistung bestimmt, z.B. die benötigten Kühlluftmenge.

Die einzelnen Kennlinien 70, 71, 72, 73, 74 können beispielsweise bei der Inbetriebnahme einer Blasmaschine empirisch ermittelt und dann in der Steuereinrichtung 62 gespeichert werden. Sie können aber auch werksseitig bereits bei Auslieferung der Maschine voreingestellt sein.

## Patentansprüche

1. Verfahren zum Temperieren von Vorformlingen (1) in einer Blasmaschine, bei dem entlang einer Transportstrecke für die Vorformlinge (1) wenigstens ein mit reflektierenden Wandungen (51) ausgestatteter Heizkasten (30) angeordnet wird, der einen Heizkanal (50) ausbildet, durch den hindurch die Vorformlinge geführt werden, wobei der Heizkasten (30) Heizmittel (39) zum Aufheizen der Vorformlinge (1) in dem Heizkanal (50) sowie wenigstens eine ein Gebläse aufweisende Kühleinrichtung (52) zum Kühlen der reflektierenden Wandungen (51) des Heizkanals aufweist, wobei die Kühlung der Wandungen mittels einer außerhalb des Heizkanals (50) an den Wandungen (51) entlang strömenden Luftmenge erfolgt, wobei die Heizleistung der Heizmittel (39) des Heizkanals (50) einstellbar ausgeführt ist, **dadurch gekennzeichnet, dass** eine Steuereinrichtung (62) vorgesehen wird, die steuerungstechnisch ausgeführt ist, die von der Kühleinrichtung (52) aufgebrachte Kühlleistung, insbesondere die geförderte Luftmenge, in Abhängigkeit von der jeweiligen Heizleistung der Heizmittel (39) des Heizkanals (50) zu steuern oder zu regeln, insbesondere in Abhängigkeit von einer Messung der Heizleistung.

2. Verfahren nach Anspruch 1, **dadurch gekennzeichnet, dass** entlang der Transportstrecke mehrere Heizkästen (30) in Transportrichtung hintereinanderliegend angeordnet werden zur Ausbildung eines von den mehreren Heizkanälen (50) der Heizkästen (30) gebildeten Heizstrecke (24).

3. Verfahren nach Anspruch 2, **dadurch gekennzeichnet, dass** jeder Heizkasten (30) eine eigene Kühleinrichtung (52) und/oder eine eigene Steuereinrichtung (62) aufweist.

4. Verfahren nach einem der vorhergehenden Ansprüche, **dadurch gekennzeichnet, dass** wenigstens ein Teil der von der Kühleinrichtung (52) aufgebrachten Kühlleistung, insbesondere die geförderten Luftmenge, zur Kühlung eines Neckbereichs (57) der Vorformlinge (1) verwendet wird, insbesondere an diesen entlang geführt wird.

5. Verfahren nach einem der vorangehenden Ansprüche, **dadurch gekennzeichnet, dass** Temperatursensoren (58, 59, 60, 61) zur Überwachung der Temperatur der reflektierenden Wandungen (51) und/oder der Neckbereiche (57) der Vorformlinge (1) angeordnet werden und in die Steuerung eingebunden werden.

6. Verfahren nach einem der vorangehenden Ansprüche, **dadurch gekennzeichnet, dass** die Kühleinrichtung (52) wenigstens einen Lüfter (53) mit einem drehzahlgeregelten Motor (55) aufweist.

7. Verfahren nach einem der vorangehenden Ansprüche, **dadurch gekennzeichnet, dass** die Kühleinrichtung (52) wenigstens eine die geförderte Luftmenge beeinflussende Drosselklappe (64) aufweist.

8. Verfahren nach einem der vorangehenden Ansprüche, **dadurch gekennzeichnet, dass** die Steuereinrichtung (62) steuerungstechnisch ausgeführt ist, die geförderte Luftmenge gemäß einer voreingestellten Kennlinie (70, 71, 72, 73, 74) in Abhängigkeit von der Heizleistung der Heizmittel (39) des Heizkanals (50) einzustellen.

9. Verfahren nach Anspruch 8, **dadurch gekennzeichnet, dass** mehrere separat steuerbare Heizkästen (30) eine Heizstrecke (24) ausbilden, und dass die Steuereinrichtung (62) steuerungstechnisch ausgeführt ist, die geförderte Luftmenge gemäß eines voreingestellten Kennlinienfeldes in Abhängigkeit von den jeweiligen Heizleistungen der einzelnen Heizkästen (30) einzustellen.

10. Verfahren nach Anspruch 7 oder 8, **dadurch gekennzeichnet, dass** die Steuereinrichtung (62) steuerungstechnisch ausgeführt ist, die geförderte Luftmenge zu erhöhen, wenn die Temperaturen der reflektierenden Wandungen (51) und/oder der Neckbereiche (57) der Vorformlinge (1) jeweils vorbestimmte kritische Temperaturen erreichen.

11. Vorrichtung zum Temperieren von Vorformlingen (1) in einer Blasmaschine, die als Heizkasten (30) mit reflektierenden Wandungen (51) ausgebildet ist und die einen Heizkanal (50) ausbildet, durch den hindurch die Vorformlinge (1) geführt werden können, wobei der Heizkasten (30) Heizmittel (39) zum Aufheizen der Vorformlinge (1) in dem Heizkanal (50) sowie wenigstens eine ein Gebläse aufweisende Kühleinrichtung (52) zum Kühlen der reflektierenden Wandungen (51) des Heizkanals (50) aufweist, wobei die Kühlung der Wandungen mittels einer außerhalb des Heizkanals (50) an den Wandungen (51) entlang strömenden Luftmenge erfolgt, wobei die Heizleistung der Heizmittel (39) des Heizkanals (50) einstellbar ausgeführt ist, **dadurch gekennzeichnet, dass** die Vorrichtung eine Steuereinrichtung (62) aufweist, die steuerungstechnisch ausgeführt ist, die von der Kühleinrichtung (52) aufgebrachte Kühlleistung, insbesondere die geförderte Luftmenge, in Abhängigkeit von der jeweiligen Heizleistung der Heizmittel (39) des Heizkanals (50) zu steuern oder zu regeln, insbesondere in Abhängigkeit von einer Messung der Heizleistung der Heizmittel (39), wobei die Vorrichtung insbesondere ausgebildet ist zur Durchführung eines der in den Ansprüche 1 bis 11 angegebenen Verfahrens.

12. Blasformmaschine, **dadurch gekennzeichnet, dass** sie einer oder mehrere Vorrichtungen nach Anspruch 11 aufweist.

## Claims

1. A method for tempering preforms (1) in a blow moulding machine, in which at least one heater box (30) provided with reflective walls (51) is arranged along a transport path for the preforms (1), said heater box (30) forming a heating duct (50) through which the preforms are guided, wherein the heater box (30) has heating means (39) for heating the preforms (1) in the heating duct (50) as well as at least one cooling device (52) having a blower and intended to cool the reflective walls (51) of the heating duct, wherein the walls are cooled by means of an amount of air flowing along the walls (51) outside the heating duct (50), wherein the heating output of the heating means (39) of the heating duct (50) is configured to be adjustable,
**characterised in that**
- a control device (62) is provided which is control-specifically configured to control or regulate the cooling output delivered by the cooling device (52), more specifically the amount of air delivered, as a function of the respective heating output of the heating means (39) of the heating duct (50), more specifically as a function of a measurement of the heating output.

2. The method in accordance with Claim 1, **characterised in that** several heater boxes (30) are arranged along the transport path one after the other in transport direction, in order to form a heating path (24) formed by the several heating ducts (50) of the heater boxes (30).

3. The method in accordance with Claim 2, **characterised in that** each heater box (30) has its own cooling device (52) and/or its own control device (62).

4. The method in accordance with any one of the preceding claims, **characterised in that** at least a part of the cooling output delivered by the cooling device (52), more specifically the amount of air delivered, is used to cool a neck area (57) of the preforms (1), is more specifically guided along the same.

5. The method in accordance with any one of the preceding claims, **characterised in that** temperature sensors (58, 59, 60, 61) are arranged for monitoring the temperature of the reflective walls (51) and/or the neck areas (57) of the preforms (1) and are incorporated into the control.

6. The method in accordance with any one of the preceding claims, **characterised in that** the cooling device (52) has at least one fan (53) having a speed-controlled motor (55).

7. The method in accordance with any one of the preceding claims, **characterised in that** the cooling device (52) has at least one throttle valve (64) influencing the amount of air delivered.

8. The method in accordance with any one of the preceding claims, **characterised in that** the control device (62) is control-specifically configured to adjust the amount of air delivered in accordance with a preset characteristic line (70, 71, 72, 73, 74) as a function of the heating output of the heating means (39) of the heating duct (50).

9. The method in accordance with Claim 8, **characterised in that** several separately controllable heater boxes (30) form a heating path (24) and that the control device (62) is control-specifically configured to adjust the amount of air delivered in accordance with a preset characteristic line field as a function of the respective heating outputs of the separate heater boxes (30).

10. The method in accordance with Claim 7 or 8, **characterised in that** the control device (62) is control-specifically configured to increase the amount of air delivered when the temperatures of the reflective walls (51) and/or the neck areas (57) of the preforms (1) each reach predefined critical temperatures.

11. A device for tempering preforms (1) in a blow moulding machine which is formed as a heater box (30) with reflective walls (51) and which forms a heating duct (50) through which the preforms (1) can be guided, wherein the heater box (30) has heating means (39) for heating the preforms (1) in the heating duct (50) as well as at least one cooling device (52) having a blower and intended to cool the reflective walls (51) of the heating duct (50), wherein the walls are cooled by means of an amount of air flowing along the walls (51) outside the heating duct (50), wherein the heating output of the heating means (39) of the heating duct (50) is configured to be adjustable, **characterised in that** the device has a control device (62) which is control-specifically configured to control or regulate the cooling output delivered by the cooling device (52), more specifically the amount of air delivered, as a function of the respective heating output of the heating means (39) of the heating duct (50), more specifically as a function of a measurement of the heating output of the heating means (39), wherein the device is particularly configured to apply a method presented in Claims 1 to 11.

12. A blow moulding machine, **characterised in that** it has one or more devices in accordance with Claim 11.

## Revendications

1. Procédé d'équilibrage de la température de préformes (1) dans une machine de moulage par soufflage, dans le cadre duquel au moins un caisson chauffant (30) doté de parois réfléchissantes (51) est placé le long d'un parcours de transport des préformes (1) pour former un canal de chauffage (50) que traversent les préformes, le caisson chauffant (30) présentant des moyens de chauffage (39) pour le réchauffement des préformes (1) dans le canal de chauffage (50) ainsi qu'au moins un dispositif de refroidissement (52) doté d'une soufflerie pour le refroidissement des parois réfléchissantes (51) du canal de chauffage (50), le refroidissement des parois étant assuré au moyen d'un courant d'air s'écoulant à l'extérieur du canal de chauffage (50) le long des parois (51) et la puissance de chauffage des moyens de chauffage (39) du canal de chauffage (50) étant réglable, **caractérisé en ce qu'**est prévu un dispositif de commande (62) techniquement conçu pour commander ou régler la puissance de refroidissement fournie par le dispositif de refroidissement (52), notamment son débit d'air, en fonction de la puissance de chauffage des moyens de chauffage (39) du canal de chauffage (50), notamment en fonction d'une mesure de la puissance de chauffage.

2. Procédé selon la revendication 1, **caractérisé en ce que** plusieurs caissons chauffants (30) sont agencés les uns derrières les autres le long du parcours de transport dans le sens du transport pour constituer une section de chauffage (24) formée par les canaux de chauffage (50) de la pluralité de caissons chauffants (30).

3. Procédé selon la revendication 2, **caractérisé en ce que** chaque caisson chauffant (30) est doté de son propre dispositif de refroidissement (52) et/ou de son propre dispositif de commande (62).

4. Procédé selon l'une des revendications précédentes, **caractérisé en ce qu' une** partie au moins de la puissance de refroidissement fournie par le dispositif de refroidissement (52), notamment son débit d'air, est utilisée pour le refroidissement d'une zone de col (57) des préformes (1), le courant d'air étant notamment conduit le long de cette zone.

5. Procédé selon l'une des revendications précédentes, **caractérisé en ce que** des capteurs de température (58, 59, 60, 61) sont agencés pour contrôler la température des parois réfléchissantes (51) et/ou des zones de col (57) des préformes (1) et sont intégrés dans le dispositif de commande.

6. Procédé selon l'une des revendications précédentes, **caractérisé en ce que** le dispositif de refroidissement (52) présente au moins un ventilateur (53) doté d'un moteur (55) à régulation de régime.

7. Procédé selon l'une des revendications précédentes, **caractérisé en ce que** le dispositif de refroidissement (52) présente au moins une soupape d'étranglement (64) qui influe sur la quantité d'air débité.

8. Procédé selon l'une des revendications précédentes, **caractérisé en ce que** le dispositif de commande (62) est techniquement conçu pour régler le débit d'air selon une caractéristique (70, 71, 72, 73, 74) préréglée en fonction de la puissance de chauffage des moyens de chauffage (39) du canal de chauffage.

9. Procédé selon la revendication 8, **caractérisé en ce que** plusieurs caissons chauffants (30) pouvant être commandés séparément forment une section de chauffage (24) et que le dispositif de commande (62) est techniquement conçu pour régler le débit d'air selon une famille de caractéristiques préréglées en fonction des puissances de chauffage respectives des différents caissons chauffants (30).

10. Procédé selon la revendication 7 ou 8, **caractérisé en ce que** le dispositif de commande (62) est techniquement conçu pour augmenter le débit d'air lorsque les températures des parois réfléchissantes (51) et/ou des zones de col (57) des préformes (1) atteignent des températures critiques respectivement prédéfinies.

11. Dispositif d'équilibrage de la température de préformes (1) dans une machine de moulage par soufflage réalisé sous forme de caisson chauffant (30) doté de parois réfléchissantes (51) et formant un canal de chauffage (50) à travers lequel peuvent être conduites les préformes (1), le caisson chauffant (30) présentant des moyens de chauffage (39) pour le réchauffement des préformes (1) dans le canal de chauffage (50) ainsi qu'au moins un dispositif de refroidissement (52) doté d'une soufflerie pour le refroidissement des parois réfléchissantes (51) du canal de chauffage (50), le refroidissement des parois étant assuré au moyen d'un courant d'air s'écoulant à l'extérieur du canal de chauffage (50) le long des parois (51) et la puissance de chauffage des moyens de chauffage (39) du canal de chauffage (50) étant réglable, **caractérisé en ce que** le dispositif présente un dispositif de commande (62) techniquement conçu pour commander ou régler la puissance de refroidissement produite par le dispositif de refroidissement (52), notamment son débit d'air, en fonction de la puissance de chauffage des moyens de chauffage (39) du canal de chauffage (50), notamment en fonction d'une mesure de la puissance de chauffage des moyens de chauffage (39), le dispositif étant notamment conçu en vue de la réalisation de l'un des procédés indiqués dans les revendications 1 à 11.

12. Machine de moulage par soufflage, **caractérisée en ce qu'**elle présente un ou plusieurs dispositifs selon la revendication 11.
